# EUROPÄISCHE PATENTANMELDUNG

(11) **EP 2 540 543 A2**
(43) Veröffentlichungstag der Anmeldung: **02.01.2013**
(21) Anmeldenummer: 12174313.2
(22) Anmeldetag: 29.06.2012
(51) Int. Cl.: B60J 5/06, B60J 10/08

(54) **Aufbau für ein Nutzfahrzeug und mit einem solchen Aufbau ausgestattetes Nutzfahrzeug**

(30) Priorität: 29.06.2011 DE 102011107351
(71) Anmelder: Schmitz Cargobull AG, 48341 Altenberge (DE)
(72) Erfinder: Stegemann, Georg, 48369 Saerbeck (DE)
(74) Vertreter: Cohausz & Florack

(57) **Zusammenfassung**

Die Erfindung betrifft einen Aufbau für ein Nutzfahrzeug, der einen Rahmen mit einem Rahmenholm (4), an dem eine aus einer geschlossenen Stellung, in der sie einen von dem Aufbau (2) umgebenen Laderaum gegenüber der Umgebung (U) abschirmt, in eine geöffnete Stellung bewegbare Seitenplane (3) und ein Dichtstreifen (12) befestigt sind, der um eine in Längsrichtung (L) des Rahmenholms (4) gerichtete Schwenkachse (Z) aus einer ersten Schwenkstellung, in der er an der Außenseite der Seitenplane (3) anliegt, in eine zweite Schwenkstellung schwenkbar ist, in der er von dem Randstreifen (17) der Seitenplane (3) abgehoben ist, und eine Betätigungseinrichtung zum Verschwenken des Dichtstreifens (12) umfasst. Um bei einem solchen Aufbau einerseits eine ordnungsgemäße Funktion des Dichtstreifens dauerhaft zu gewährleisten und andererseits das Verschwenken des Dichtstreifens jederzeit auch unter ungünstigen Bedingungen problemlos zu ermöglichen, schlägt die Erfindung vor, dass die Betätigungseinrichtung zum Verschwenken des Dichtstreifens (12) ein Betätigungselement (19) umfasst, das zwischen dem Rahmenholm (4) und dem Dichtstreifen (12) angeordnet ist und von der dem Rahmenholm (4) zugeordneten Seite des Dichtstreifens (12) gegen den Dichtstreifen (12) wirkt.

## Beschreibung

Die Erfindung betrifft einen Aufbau für ein Nutzfahrzeug, der einen Rahmen mit einem Rahmenholm umfasst. An dem Rahmenholm ist eine Seitenplane befestigt, die aus einer geschlossenen Stellung, in der sie einen von dem Aufbau umgebenen Laderaum gegenüber der Umgebung abschirmt, in eine geöffnete Stellung bewegbar ist, in der der Laderaum über eine von der Seitenplane freigegebene Öffnung beladen werden kann. Des Weiteren ist an dem Rahmenholm ein Dichtstreifen befestigt, der um eine in Längsrichtung des Rahmenholms gerichtete Schwenkachse aus einer ersten Schwenkstellung, in der er an der Außenseite eines dem Rahmenholm zugeordneten Randstreifens der Plane anliegt, in eine zweite Schwenkstellung schwenkbar ist, in der er von dem Randstreifen der Plane abgehoben ist. Zum Verschwenken des Dichtstreifens ist dabei eine Betätigungseinrichtung vorgesehen.

Ebenso betrifft die Erfindung ein Nutzfahrzeug, das mit einem solchen Aufbau ausgestattetet ist. Dabei handelt es sich bei einem erfindungsgemäß ausgestatteten Nutzfahrzeug insbesondere um einen Sattelauflieger des so genannten "Curtain-Sider-Typs", bei dem die Beladung der Ladefläche über die Längsseite erfolgt. Die den Längsseiten zugeordneten Seitenplanen des Aufbaus lassen sich zu diesem Zweck in Richtung der Stirn- oder Rückseite des Aufbaus schieben. Dabei legen sich die Seitenplanen in Falten, wodurch sie am Ende ihres Schiebewegs so verstaut werden können, dass sie nur einen minimalen Raum einnehmen und die zum Beladen an der jeweiligen Längsseite des Fahrzeugs zur Verfügung stehende Öffnung eine maximale Größe hat.

Um die erforderliche Verschiebbarkeit zu ermöglichen, sind die Seitenplanen an dem Rahmen in an dem jeweiligen Rahmenholm ausgebildeten Laufschienen geführt. Der bei Aufbauten der hier in Rede stehenden Art vorgesehene Dichtstreifen verhindert, dass im Bereich der Laufschiene Feuchtigkeit in den Laderaum gelangt. Zu diesem Zweck ist der Dichtstreifen in der Regel dicht an den die jeweilige Plane tragenden Rahmenholm angeschlossen und liegt, den Bereich der Laufschiene ausreichend weit übergreifend, an der Außenseite der Seitenplane an. Dabei übt der Dichtstreifen einen bestimmten Anlagedruck gegen die Seitenplane aus. Dieser ist so bemessen, dass der Dichtstreifen über seine Länge nach Art einer Lippe möglichst gleichmäßig in dichter Anlage an der Seitenplane gehalten wird.

Auch wenn sich bei geschlossenem Aufbau durch den Dichtstreifen eine dauerhaft dichte Abschirmung des von dem Aufbau umgebenen Laderaums gegenüber der Umgebung gewährleisten lässt, hat der Dichtstreifen in der Praxis den Nachteil, dass die Seitenplane beim Auf- und Zuschieben an dem gegen sie drückenden Dichtstreifen entlang schabt. Die dabei zwischen Dichtstreifen und Seitenplane bestehende Reibung führt zu einem erhöhten Verschleiß am Dichtstreifen und der Seitenplane. Darüber hinaus erschwert der Dichtstreifen beim Aufschieben der Seitenplane eine geordnete, für die platzsparende Verstauung angestrebte Faltenbildung. Genauso wird beim Schließen das Glattziehen der Seitenplane behindert.

Um diese Nachteile zu beseitigen, ist in der DE 196 04 285 C2 vorgeschlagen worden, den Dichtstreifen mit Hilfe eines Stangenelements zu verschwenken. Das Stangenelement erstreckt sich dabei in Längsrichtung des Dichtstreifens und trägt an seinem unteren, der Seitenplane zugeordneten Rand einen elastischen, ebenfalls nach Art einer Dichtlippe ausgebildeten Abschnitt aus elastischem Material. Gleichzeitig ist das Stangenelement über einen weiteren elastischen Streifen mit dem Rahmenholm verbunden, der nach Art eines Filmscharniers das Verschwenken des von dem Stangenelement getragenen Dichtlippenabschnitts um eine im Bereich zwischen dem Stangenelement und dem Rahmenholm angeordnete Schwenkachse erlaubt. Zum Verschwenken ist eine Betätigungseinrichtung vorgesehen, die beispielsweise an einer den Rahmenholm tragenden Eckrunge des Aufbaus befestigt und direkt mit dem Stangenelement verkoppelt ist. Zum Öffnen der Seitenplane wird das Stangenelement mit dem Dichtlippenabschnitt von der Seitenplane weg nach oben verschwenkt. Der Abstand zwischen dem Dichtlippenabschnitt und der Seitenplane wird dabei so eingestellt, dass die Seitenplane frei zur Seite geschoben werden kann und sich ebenso ungehindert in Falten legen kann, welche ein platzsparendes Verstauen der Seitenplane ermöglicht. Genauso einfach lässt sich die Seitenplane bei nach oben geschwenktem Dichtlippenabschnitt zurück in die geschlossene Stellung schieben. Nach dem Schließen des Aufbaus wird die Stange mit dem Dichtlippenabschnitt wieder in ihre Ausgangsstellung zurückgeschwenkt, in der der Dichtlippenabschnitt flach an der Seitenplane anliegt.

Trotz aller Vorteile dieser Lösung erweist sie sich insbesondere bei Nutzfahrzeugen von großer Länge als problematisch, bei denen sich der Rahmenholm und die Seitenplane jeweils über die gesamte Länge des Fahrzeugs erstrecken. So verformt sich der Rahmenholm bei der Be- und Endladung solcher Fahrzeuge unvermeidbar. Ein für das Verschwenken an dem Dichtstreifen vorgesehenes, elastisch mit dem Rahmenholm verbundenes Stangenelement kann dieser Verformung nur bedingt folgen. Hieraus ergibt sich die Gefahr, dass die elastische Verbindung zwischen dem Rahmenholm und dem Stangenelement übermäßig durch Scherkräfte belastet wird. Darüber hinaus kann sich das aus dem elastischen Streifen, dem steifen Stangenelement und dem elastischen Dichtlippenabschnitt zusammengesetzte Dichtelement in Folge der Verformung des Rahmenholms insgesamt so stark verwinden, dass es trotz der ihm eigenen Elastizität nicht mehr mit der erforderlichen Gleichmäßigkeit an der Seitenplane anliegt.

Vor dem Hintergrund des voranstehend erläuterten Standes der Technik bestand die Aufgabe der Erfindung darin, einen Aufbau der voranstehend erläuterten Art zu schaffen, bei dem unabhängig von Verformungen des die Seitenplane tragenden Rahmenholms einerseits eine ordnungsgemäße Funktion des Dichtstreifens dauerhaft gewährleistet ist und bei dem andererseits das Verschwenken des Dichtstreifens jederzeit auch unter ungünstigen Bedingungen problemlos möglich ist. Ebenso sollte ein Nutzfahrzeug mit einem Aufbau dieser Art geschaffen werden, bei dem das Öffnen und Schließen der Seitenplane vereinfacht ist.

In Bezug auf den Aufbau ist diese Aufgabe erfindungsgemäß dadurch gelöst worden, dass ein solcher Aufbau die in Anspruch 1 angegebenen Merkmale aufweist.

In Bezug auf das Nutzfahrzeug ist die voranstehend genannte Aufgabe dadurch gelöst worden, dass das Nutzfahrzeug mit einem erfindungsgemäßen Aufbau ausgestattet ist.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Aufbau für ein Nutzfahrzeug weist in Übereinstimmung mit dem eingangs angegebenen Stand der Technik einen Rahmen mit einem Rahmenholm, an dem eine Seitenplane, die aus einer geschlossenen Stellung, in der sie einen von dem Aufbau umgebenen Laderaum gegenüber der Umgebung abschirmt, in eine geöffnete Stellung bewegbar ist, in der der Laderaum über eine von der Seitenplane freigegebene Öffnung beladbar ist, und ein Dichtstreifen befestigt sind, der um eine in Längsrichtung des Rahmenholms gerichtete Schwenkachse aus einer ersten Schwenkstellung, in der er an der Außenseite der Seitenplane, insbesondere eines dem Rahmenholm zugeordneten Randstreifens der Seitenplane, anliegt, in eine zweite Schwenkstellung schwenkbar ist, in der er von dem Randstreifen der Plane abgehoben ist, und eine Betätigungseinrichtung zum Verschwenken des Dichtstreifens auf.

Erfindungsgemäß umfasst nun die Betätigungseinrichtung zum Verschwenken des Dichtstreifens ein Betätigungselement, das zwischen dem Rahmenholm und dem Dichtstreifen angeordnet ist und von der dem Rahmenholm zugeordneten Seite des Dichtstreifens gegen den Dichtstreifen wirkt.

Das erfindungsgemäß vorgesehene Betätigungselement drückt also zum Verschwenken des Dichtstreifens von dessen dem Rahmenholm und damit einhergehend den vom Aufbau umschlossenen Laderaum zugeordneten Seite gegen den Dichtstreifen und stützt sich dabei gegen den Rahmenholm ab. Auf diese Weise lässt sich der Dichtstreifen mit Hilfe des Betätigungselements gegen die Gewichtskraft und gegen eine gegebenenfalls zum Andrücken des Dichtstreifens gegen die Seitenplane ergänzend wirkende elastische Rückstellkraft aus seiner an der Seitenplane anliegende Dichtstellung in eine von der Seitenplane abstehende Öffnungsstellung schwenken, in der die Seitenplane unter weitestgehender Vermeidung eines Kontakts mit dem Dichtstreifen ungehindert verschoben werden kann. Das Betätigungselement hält den Dichtstreifen in dieser Stellung, bis es sich wieder in seine Ausgangsstellung zurückzieht. Der Dichtstreifen folgt dieser Rückzugsbewegung aufgrund seines Eigengewichts, wobei die durch die Gewichtskraft bewirkte Rückstellkraft durch die zusätzliche, gegen die Seitenplane gerichtete elastische Rückstellkraft ergänzt wird.

Die erfindungsgemäße Anordnung des Betätigungselements zwischen dem Rahmenholm und dem Dichtstreifen erlaubt auf diese Weise eine Verschwenkung des Dichtstreifens alleine durch eine gegen den Dichtstreifen gerichtete Druckkraft. Diese setzt keine direkte, dauerhaft bestehende mechanische Verkopplung von Dichtstreifen und Betätigungselement voraus. Demzufolge können der Dichtstreifen und das jeweils vorgesehene Betätigungselement Verformungen des sie tragenden Rahmenholms unabhängig voneinander problemlos folgen und ausgleichen, ohne dass dadurch ihre Funktion beeinträchtigt wird oder Spannungen auftreten, die andernfalls Beschädigungen des Dichtstreifens oder des Betätigungselement verursachen könnten.

Mit der Erfindung steht somit ein Aufbau für ein Nutzfahrzeug zur Verfügung, bei dem unabhängig von Verformungen des die Seitenplane tragenden Rahmenholms eine ordnungsgemäße Funktion des Dichtstreifens dauerhaft gewährleistet ist und bei dem zusätzlich das Verschwenken des Dichtstreifens jederzeit auch unter ungünstigen Bedingungen problemlos möglich ist.

Grundsätzlich kann der Dichtstreifen aus einem starren oder elastischen Material gefertigt sein. Voraussetzung für eine ordnungsgemäße Funktion des Dichtstreifens ist lediglich, dass der Dichtstreifen die gewünschte Abschirmung der Laufschiene alleine dadurch bewirkt, dass er einerseits dicht und gelenkig an dem Rahmenholm befestigt ist und andererseits mit einem Abschnitt, der sich bei geschlossenem Aufbau in seiner Hauptrichtung typischerweise parallel zur Ebene der Seitenplane erstreckt, die geschlossene Seitenplane im an die Seitenplane angeschwenkten Zustand im Bereich ihrer der Laufschiene zugeordneten äußeren Randfläche ausreichend weit von dem Dichtstreifen überlappt.

Im Fall, dass der Dichtstreifen aus einem festen Material besteht, kann es sich bei diesem Material beispielsweise um ein gut verformbares Stahlblech oder ein Leichtmetallprofil handeln. Ergänzt werden kann die Dichtwirkung eines aus festem Material bestehenden Dichtstreifens dadurch, dass der an sich steife Dichtstreifen an seinem freien Rand ein elastisches Dichtelement, wie beispielsweise eine Dichtlippe, trägt, mit der er im an die Seitenplane angeschwenktem Zustand gegen die geschlossene Seitenplane drückt. Indem der Dichtstreifen zusätzlich mit einer gegen die Seitenplane gerichteten elastischen Kraft belastet wird, kann die dauerhafte Abdichtung ebenfalls unterstützt werden.

Die dichte gelenkige Verbindung zwischen dem Dichtstreifen und dem Rahmenholm kann dadurch hergestellt werden, dass der Dichtstreifen mindestens einen aus einem elastisch verformbaren Material bestehenden Streifenabschnitt aufweist, über den er mit dem Rahmenholm verbunden ist. Der betreffende Streifenabschnitt wirkt in diesem Fall nach Art eines Filmscharniers, das eine dauerelastische Verschwenkung des Dichtstreifens um eine parallel zum Rahmenholm ausgerichtete Achse ermöglicht. Gleichzeitig kann der elastische Streifenabschnitt so ausgelegt sein, dass er Lageabweichungen, die sich in Folge von Verformungen des Rahmenholms ergeben, ausgleicht.

Die elastische Verformbarkeit des als elastisches Gelenk wirkenden Streifenabschnitts des Dichtstreifens kann zudem für eine besonders einfache, dichte Ankopplung des Dichtstreifens an den Rahmenholm genutzt werden. Hierzu kann der Streifenabschnitt mit seinem dem Rahmenholm zugeordneten Rand in einer an dem Rahmenholm ausgebildeten Nut gehalten sein. In diese Nut kann der betreffende Streifenabschnitt mit seinem der Nut zugeordneten Rand unter leichtem Zusammendrücken eingeführt werden, so dass der in der Nut sitzende Randbereich des Dichtstreifens im fertig montierten Zustand unter einem ausreichenden Anpressdruck gegen die die Nut begrenzenden Flächen drückt und so ein Eindringen und Durchtreten von Feuchtigkeit im Bereich der Nut sicher verhindert.

In der Praxis kann der ein elastisches Gelenk bildende Abschnitt des Dichtstreifens zusätzlich dazu genutzt werden, den Abschnitt, mit dem der Dichtstreifen überlappend zur Seitenplane ausgerichtet ist, in einem für eine optimale Abschirmwirkung günstigen Abstand zum Rahmenholm zu halten. Zu diesem Zweck kann der als Gelenk dienende Abschnitt des Dichtstreifens von der Ebene, in der sich die Seitenplane bei geschlossenem Aufbau erstreckt, in einem Winkel von 90° ± 75° abstehen, wobei sich eine optimale Wirkung ergibt, wenn der Winkel 90° ± 10° beträgt.

Die gewünschte Abschirm- und Abdichtfunktion des bei einem erfindungsgemäßen Aufbau vorhandenen Dichtstreifens lässt sich bei minimiertem Herstellungsaufwand dauerhaft auf einfache Weise dadurch gewährleisten, dass der Dichtstreifen insgesamt aus einem elastisch verformbaren Material besteht. In diesem Fall kann die elastische Nachgiebigkeit des die Seitenplane bei an sie angeschwenktem Dichtstreifen überlappenden Dichtstreifenabschnitts zum Erzeugen einer elastischen Anpresskraft genutzt werden, unter der im praktischen Einsatz mindestens der freie Rand des Dichtstreifens an der geschlossenen Seitenplane gehalten wird. Die betreffende Anpresskraft kann durch eine über den die gelenkige Anbindung an den Rahmenholm darstellenden Abschnitt des Dichtstreifens erfolgen. Dieser wird dazu so geformt und mit dem Rahmenholm verbunden, dass er auch bei an der Seitenplane anliegendem Dichtstreifen noch unter einer gewissen Vorspannung steht, welche ein gegen die Seitenplane gerichtetes Rückstellmoment bewirkt.

Ein weiterer Vorteil eines insgesamt aus elastisch verformbaren Material hergestellten Dichtstreifens besteht darin, dass ein solcher Dichtstreifen problemlos die Verformung des ihn tragenden Rahmenholms ausgleichen kann, ohne dass es dazu gesonderter Vorkehrungen bedarf.

Unabhängig davon, aus welchem Material der Dichtstreifen bei einem erfindungsgemäßen Aufbau besteht, kann seine Formhaltigkeit auch unter den im praktischen Einsatz auf ihn wirkenden Kräften dadurch verbessert werden, dass der sich in seiner Hauptrichtung parallel zur Ebene der Seitenplane bei geschlossenem Aufbau erstreckende Abschnitt des Dichtstreifens nach außen gewölbt ist.

Das erfindungsgemäß im Bereich zwischen dem Rahmenholm und dem Dichtstreifen angeordnete und gegen den Rahmenholm abgestützte Betätigungselement der für das Abschwenken des Dichtelements vorgesehenen Betätigungseinrichtung besteht gemäß einer besonders praxisgerechten Ausführung der Erfindung aus einem aufweitbaren Balg, der mindestens abschnittweise aus einem elastischen Material besteht, so dass er durch Druckbeaufschlagung eines in ihm geführten Druckmediums in radialer Richtung elastisch expandierbar ist. In Folge der bei seiner Druckbeaufschlagung eintretenden Aufweitung drückt ein solches balgartiges Betätigungselement gegen den an ihm anliegenden und gleichzeitig gelenkig mit dem Rahmenholm verbundenen Dichtstreifen von dem Rahmenholm und damit einhergehend von der Seitenplane weg, so dass die Seitenplane ohne Behinderung durch den Dichtstreifen verschoben werden kann. Im druckentlasteten Zustand erschlafft der Balg dann so, dass er nur noch einen geringen Raum einnimmt und der Dichtstreifen selbsttätig gegen die Seitenplane zurückschwenkt. Optimalerweise besteht das als Balg ausgebildete Betätigungselement aus einem dauerelastischen Material, das nach der Druckentlastung in eine definierte Ausgangsform zurückgeht und bei Druckbeaufschlagung eine ebenso definierte aufgeweitete Form einnimmt.

Das als druckbeaufschlagbarer Balg ausgebildete Betätigungselement kann beispielsweise nach Art eines Ballons ausgebildet sein, wobei selbstverständlich mehrere solcher Ballons über die Länge des Rahmenholms bzw. des Dichtstreifens verteilt angeordnet sein können, die über eine geeignete Druckleitung mit einer Einrichtung verbunden sind, über die die Druckbeaufschlagung und Druckentlastung des Mediums erfolgt, mit dem die Ballons gefüllt sind.

Alternativ oder ergänzend kann das balgartige, mit einem Druckmedium befüllte Betätigungselement auch nach Art eines Schlauchs ausgebildet sein, der sich vorteilhafterweise längs des Rahmenholms erstreckt. Auch solche schlauchartigen Balge lassen sich durch Druckbeaufschlagung um ein Vielfaches ihres Ausgangsvolumens in radialer Richtung aufweiten, so dass der an dem in diesem Fall schlauchförmigen Betätigungselement anliegende Dichtstreifen einhergehend mit der Zunahme des Umfangs des Betätigungselements von der Seitenplane abgeschwenkt wird. In entsprechender Weise bewegt sich der Dichtstreifen wieder in seine Ausgangsstellung, in der er an der Seitenplane anliegt, zurück, wenn der Schlauch sich in Folge einer Druckentlastung wieder in seine Ausgangsform zusammenzieht.

Unabhängig davon, ob das als expandierbarer Balg ausgebildete Betätigungselement als Schlauch, Ballon oder in anderer Weise geformt ist, kann das balgförmige Betätigungselement beispielsweise als integraler Bestandteil des Dichtstreifen vorgesehen oder als gesondertes Bauelement am Dichtstreifen oder am Rahmenholm befestigt sein. Unabhängig davon, ob das Betätigungselement am Rahmenholm oder an dem Dichtstreifen befestigt ist, kann die Befestigung des Betätigungselements insbesondere durch Verkleben erfolgen. Ebenso ist es denkbar, sowohl am Rahmenholm als auch am Dichtstreifen jeweils ein Betätigungselement vorzusehen, wobei sich die Funktion der Betätigungselemente in diesem Fall ergänzen kann.

Der besondere Vorteil eines balgförmigen, aus elastischem Material bestehenden Betätigungselements besteht dabei darin, dass seine Funktion von Verformungen des Rahmenholms oder der Dichtlippe vollständig unbeeinflusst bleibt. Darüber hinaus kann das Expandieren und Zusammenziehen eines balgförmigen Betätigungselements auf besonders einfache Weise erfolgen, in dem der auf dem Druckmedium lastende Druck variiert wird. Dabei ist es nicht nur denkbar, das Betätigungselement durch Druckbeaufschlagung aufzuweiten, sondern auch dessen Zusammenziehen durch gezielte Einstellung eines Unterdrucks im balgförmigen Betätigungselement zu unterstützen.

Bei dem im Fall eines balgförmigen Betätigungselementes zum Druckbeaufschlagen vorgesehenen Druckmedium kann es sich um Druckluft handeln, wie sie bei einem Nutzfahrzeug üblicherweise beispielsweise zur Betätigung der Bremsen zur Verfügung steht. Ebenso ist es jedoch auch möglich, ein inkompressibles Medium, wie beispielsweise Wasser oder Öl, als Druckmedium zu verwenden, welches von einer an dem Nutzfahrzeug vorhandenen Pumpe gefördert wird.

Alternativ zu einem balgförmigen Betätigungselement kann bei einem erfindungsgemäßen Aufbau das Betätigungselement auch als rein mechanisch wirkendes Element ausgeführt sein. So ist es beispielsweise denkbar, einen oder mehrere Exzenterhebel als Betätigungselement vorzusehen, wobei in diesem Fall die Betätigungseinrichtung eine Schwenkeinrichtung zum Schwenken des Exzenterhebels aus einer ersten Stellung, in der er eng an dem Rahmenholm anliegt, in eine zweite Stellung umfasst, in der der Exzenterhebel die Dichtlippe von der Seitenplane abhebt. Sind mehrere solcher mechanisch wirkenden Betätigungselemente vorhanden, so können diese über eine flexible Antriebswelle miteinander verbunden sein, die aufgrund der ihr eigenen Nachgiebigkeit ebenfalls unbeeinflusst von Verformungen des Rahmenholms bleibt.

Aufbauten der erfindungsgemäßen Art sind typischerweise für Sattelauflieger des Curtain-Sider-Typs bestimmt, bei denen sich der Rahmenholm in Längsrichtung des jeweiligen Nutzfahrzeugs erstreckt und von Eckrungen getragen ist, die ihn in einem bestimmten Abstand zur Ladefläche des Nutzfahrzeugs halten. Um unterschiedliche Ladehöhen des von dem Aufbau umgebenen Laderaums zu ermöglichen, kann bei solchen Aufbauten häufig der Abstand zwischen dem Rahmenholm und der Ladefläche des Nutzfahrzeugs verändert werden. Der besondere Vorteil der Erfindung besteht bei einem solchen höhenverstellbaren Aufbau darin, dass der Dichtstreifen auch zum Anheben oder Absenken des Aufbaus von der Seitenplane abgeschwenkt werden kann, so dass insbesondere beim Absenken des Rahmenholms sichergestellt ist, dass der Dichtstreifen nicht auf der Seitenplane oder der Laufschiene aufsetzt und sich dort so verkeilt, dass das Absenken behindert und der Dichtstreifen beschädigt wird.

Bei einer weiteren für die Praxis besonders relevanten Ausgestaltung der Erfindung ist die zum Verschwenken des Dichtstreifens vorgesehene Betätigungseinrichtung mit einem Sensor verkoppelt, der in Abhängigkeit von einem äußeren Ereignis ein Stellsignal zum Verstellen des Dichtstreifens an die Betätigungseinrichtung abgibt. Bei dem betreffenden äußeren Ereignis, das ein Stellsignal auslöst, kann es sich um den Beginn des Öffnens und die Beendigung des Schließens der Seitenplane handeln. Alternativ oder ergänzend kann bei einem höhenverstellbaren Aufbau das äußere Ereignis, das ein Stellsignal auslöst, das Absenken des Rahmenholms sein. Selbstverständlich kann auch ein gesonderter einfacher Schalter vorgesehen sein, über den beispielsweise der Fahrzeugführer das Verschwenken des Dichtstreifens auslösen kann.

Das Anschwenken des Dichtstreifens an die zugeordnete Seitenplane kann dadurch unterstützt werden, dass ein zusätzliches Betätigungselement vorgesehen ist, das eine gegen die Seitenplane gerichtete Kraft auf den Dichtstreifen ausübt. Bei diesem Federelement kann es sich beispielsweise um eine sich entlang des Dichtstreifens erstreckende und an dem Rahmenholm abgestützte Lippe aus einem elastischen Material handeln. Alternativ oder ergänzend kann auch ein aktives Betätigungselement eingesetzt werden. Bei diesem kann es sich wiederum um ein balgförmiges, mit Druck beaufschlagbares Element handeln, das beispielsweise im Wechsel mit dem erfindungsgemäß zwischen dem Rahmenholm und dem Dichtstreifen angeordneten Betätigungselement arbeitet.

Nachfolgend wird die Erfindung anhand von Ausführungsbeispielen näher erläutert. Es zeigen:
- Fig. 1: einen mit einem Planen-Aufbau ausgestatteten Trailer für einen Sattelzug in seitlicher Ansicht;
- Fig. 2: einen Ausschnitt A des in Fig. 1 gezeigten Aufbaus in einer ersten Betriebsstellung in einem Schnitt entlang der in Fig. 1 eingezeichneten Schnittlinie X-X;
- Fig. 3: den Ausschnitt A des in Fig. 1 gezeigten Aufbaus in einer zweiten Betriebsstellung in dem Schnitt entlang der in Fig. 1 eingezeichneten Schnittlinie X-X;
- Fig. 4: eine alternative Ausgestaltung des Aufbaus in einer der Fig. 3 entsprechenden Ansicht.

Der konventionell aufgebaute Trailer 1 vom so genannten "Curtain-Sider-Typ" umfasst einen quaderförmigen Aufbau 2, der auf einem Fahrwerkschassis C montiert ist und einen mit zu transportierendem Gut befüllbaren Innenraum umgibt.

Die beiden Längsseiten des Aufbaus 2 sind in bekannter Weise jeweils durch eine Seitenplane 3 verschlossen. Aufgrund der hier gewählten Ansicht ist von den Seitenplanen nur die der einen Längsseite des Trailers 1 zugeordnete Seitenplane 3 sichtbar.

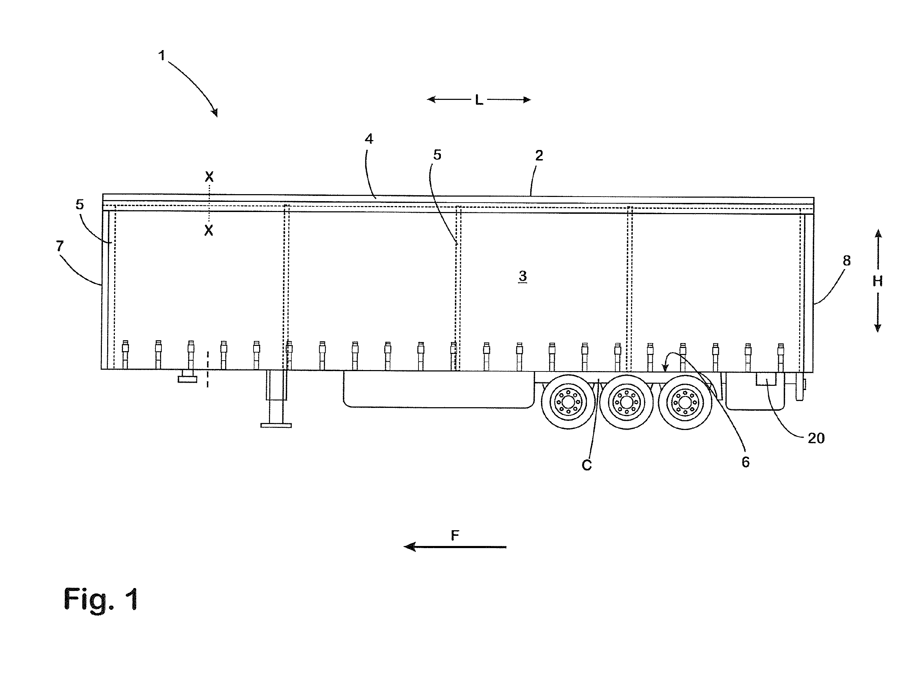

Die Seitenplanen 3 sind jeweils mit ihrem oberen Längsrand an einem Rahmenholm 4 des Aufbaus 2 gelagert, der sich über die gesamte Länge des Trailers 1 erstreckt und durch Rungen 5 in einem bestimmten Abstand zu der Ladefläche 6 des Trailers 1 gehalten wird. Die Länge der senkrecht zur Ladefläche 6 ausgerichteten Rungen 5 kann verstellbar sein, um den Abstand H des Rahmenholms 4 über der Ladefläche 3 und damit einhergehend die Höhe des Aufbaus 2 verstellen zu können. Bei geschlossenem Aufbaus 2 sind der Rahmenholm 4 und die Rungen 5 durch die jeweilige Seitenplane 2 zumindest teilweise verdeckt, so dass sie in Fig. 1 zum Teil nur durch gestrichelte Linien angedeutet sind.

Die Seitenplanen 3 können jeweils in oder gegen die Fahrtrichtung F in Richtung der Stirnwand 7 oder der Rückwand 8 des Trailers 1 geschoben werden, um den von dem Aufbau 2 umgebenen Laderaum des Trailers 1 von der jeweiligen Längsseite her zu beladen.

Die den Längsseiten des Aufbaus zugeordneten Rahmenholme 4 sind jeweils als Profile aus einem Blechmaterial oder einem Leichtmetallwerkstoff geformt. Sie tragen an ihre der Ladefläche 6 zugewandten Unterseite eine Laufschiene 9, in der die jeweilige Seitenplane mittels Rollen 10 entlang des jeweiligen Rahmenholms 4 verschiebbar gelagert sind.

Zur Abschirmung des Bereichs, in dem die Seitenplanen 3 in der ihnen zugeordneten Laufschiene 9 gelagert sind, gegenüber der Umgebung U ist an dem jeweiligen Rahmenholm 4 jeweils ein Dichtstreifen 12 befestigt, der aus einem elastisch verformbaren Gummiwerkstoff geformt ist und sich über die gesamte Länge des Aufbaus 2 erstreckt.

Der Dichtstreifen 12 sitzt mit seinem oberen, nach Art eines Keders verdickten Rand 13 in einer in den jeweiligen Rahmenholm 4 eingeformten Nut 14. Der verdickte Rand 13 ist dabei so in die Nut 14 eingepresst, dass er mit ausreichender Anpresskraft so dicht an den die Nut 14 begrenzenden Flächen anliegt, dass keine Feuchtigkeit von der Umgebung U aus durch die Nut 14 treten kann.

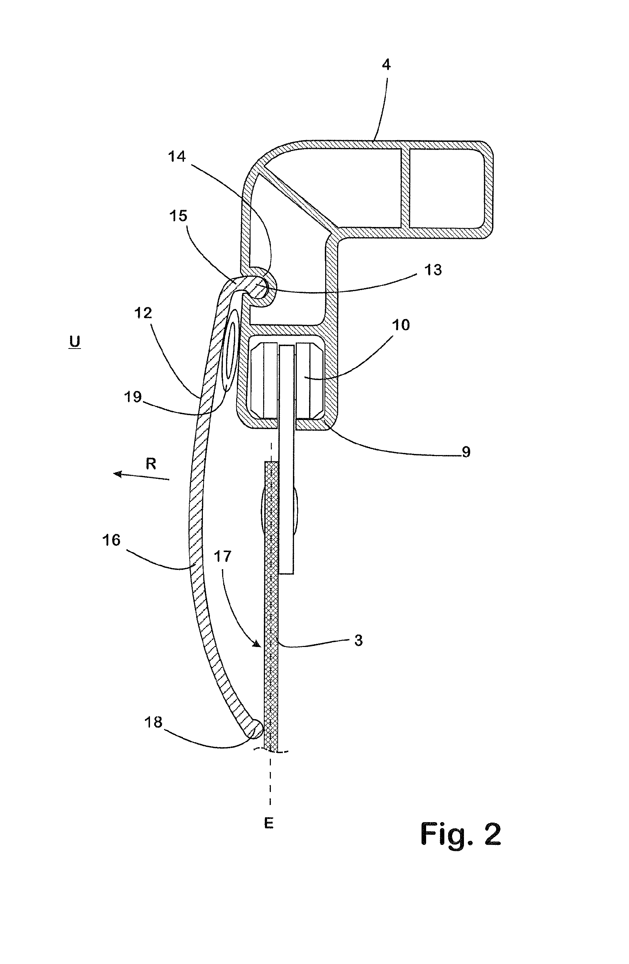

Von dem verdickten Rand 13 geht ein Streifenabschnitt 15 des Dichtstreifens 12 aus. Dieser Streifenabschnitt 15 steht bei an die jeweilige Seitenplane 3 angeschwenktem Dichtstreifen 12 (Fig. 2) im Wesentlichen senkrecht von der Ebene E ab, in der sich die Seitenplane 3 bei geschlossenem Aufbau 2 befindet.

An den Streifenabschnitt 15 ist ein weiterer Abschnitt 16 des Dichtstreifens 12 angeformt, dessen Hauptrichtung im Wesentlichen rechtwinklig zum Streifenabschnitt 15 und parallel zur Ebene E so ausgerichtet ist, dass der Abschnitt 16 bei an die Seitenplane 12 angeschwenktem Dichtstreifen den der Laufschiene 9 zugeordneten äußeren Randbereich 17 der jeweiligen Seitenplane 3 überlappt. Dabei ist der Abschnitt 16 im Querschnitt gesehen in radialer Richtung R leicht nach außen von der Ebene E weg gewölbt und weist an seinem unteren freien Rand eine Verdickung 18 auf, mit der er bei an die Seitenplane 3 angeschwenktem Dichtstreifen 12 gegen die Seitenplane 3 drückt.

In einem zwischen dem Dichtstreifen 12 und dem zugeordneten Rahmenholm 4 jeweils vorhandenen Zwischenraum ist ein nach Art eines Schlauchbalgs ausgebildetes Betätigungselement 19 angeordnet, das sich über die gesamte Länge des Aufbaus 2 entlang des jeweiligen Rahmenholms 4 erstreckt. Das schlauchförmige Betätigungselement 19 ist über eine hier nicht dargestellte Versorgungsleitung und eine Ventileinrichtung 20 an die hier weiter ebenfalls nicht dargestellte Druckluftversorgung des Trailers 1 angeschlossen.

Dabei besteht das schlauchförmige Betätigungselement 19 aus einem dauerelastischen, in radialer Richtung R expandierbaren Material, welches so ausgelegt ist, dass sich der Umfang des Betätigungselements 19 um ein Vielfaches aufweitet, sobald es mit Druckluft beaufschlagt wird. Genauso bildet sich das Betätigungselement 19 zu seiner Ursprungsgröße zurück, wenn in seinem Innern 21 keine Druckluft mehr ansteht.

Weitet sich das an dem Rahmenholm 4 abgestützte schlauchförmige Betätigungselement 19 in Folge der Druckbeaufschlagung auf, so drückt es gegen den an ihm anliegenden Abschnitt 16 des Dichtstreifens 12. Der Streifenabschnitt 15 des Dichtstreifens 12 bildet dabei ein nach Art eines Filmscharniers gestaltetes Gelenk, welches eine Schwenkachse Z definiert, um das der Dichtstreifen 12 bei zunehmender Aufweitung des schlauchförmigen Betätigungselements 19 geschwenkt wird. Aufgrund der dem Streifenabschnitt 15 eigenen Elastizität entsteht dabei ein gegen die Seitenplane 3 gerichtetes, mit zunehmender, von der Seitenplane 3 weggerichteter Verschwenkung ansteigendes Rückstellmoment M.

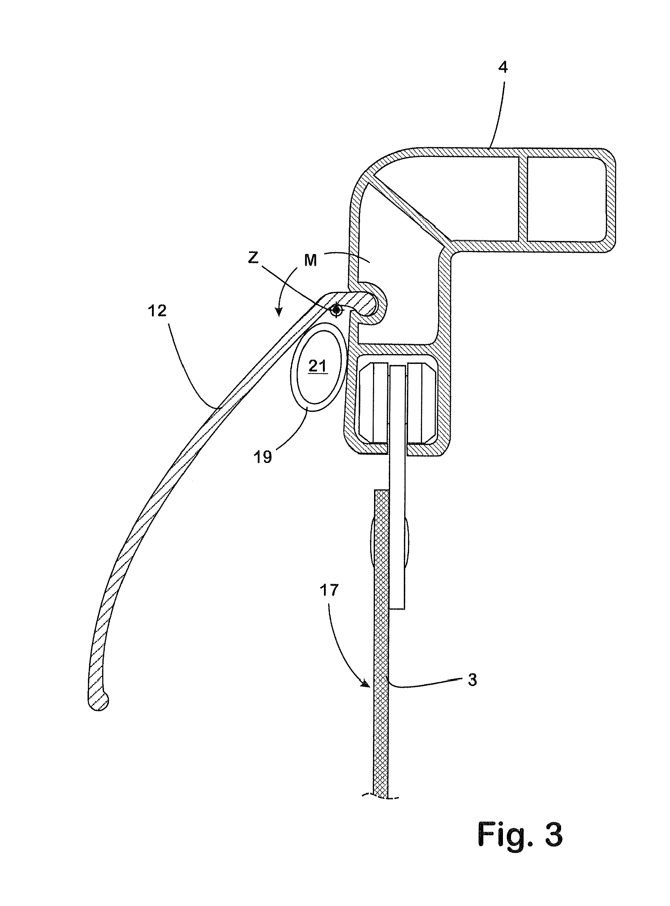

Der Druck innerhalb des schlauchförmigen Betätigungselements 19 wird erhöht und damit einhergehend dessen Umfang aufgeweitet, bis der Dichtstreifen 12 eine Schwenkstellung erreicht hat, in der er den freien Lauf der Rollen 10 nicht behindert und die Seitenplane 3 auch unter Berücksichtigung der beim Aufschieben eintretenden Faltenbildung weitestgehend ohne Kontakt zum Dichtstreifen 12 entlang des Rahmenholms 4 verschoben werden kann (Fig. 3).

Nachdem die Seitenplane 3 nach dem Ent- und Beladen des Trailers 1 wieder geschlossen worden ist, wird die im schlauchförmigen Betätigungselement 19 anstehende Druckluft abgelassen. Einhergehend mit dieser Druckentlastung schrumpft das Betätigungselement 19 wieder so zusammen, dass sein Umfang die Ausgangsgröße erreicht, in der das Betätigungselement 19 gerade ausfüllt. Einhergehend mit dem Zusammenziehen des Betätigungselements 19 wird der Dichtstreifen 12 in Folge des elastischen Rückstellmoments zurück gegen die Seitenplane 3 geschwenkt, bis er mit seinem unteren freien Rand 13 wieder dicht an der Seitenplane 3 anliegt.

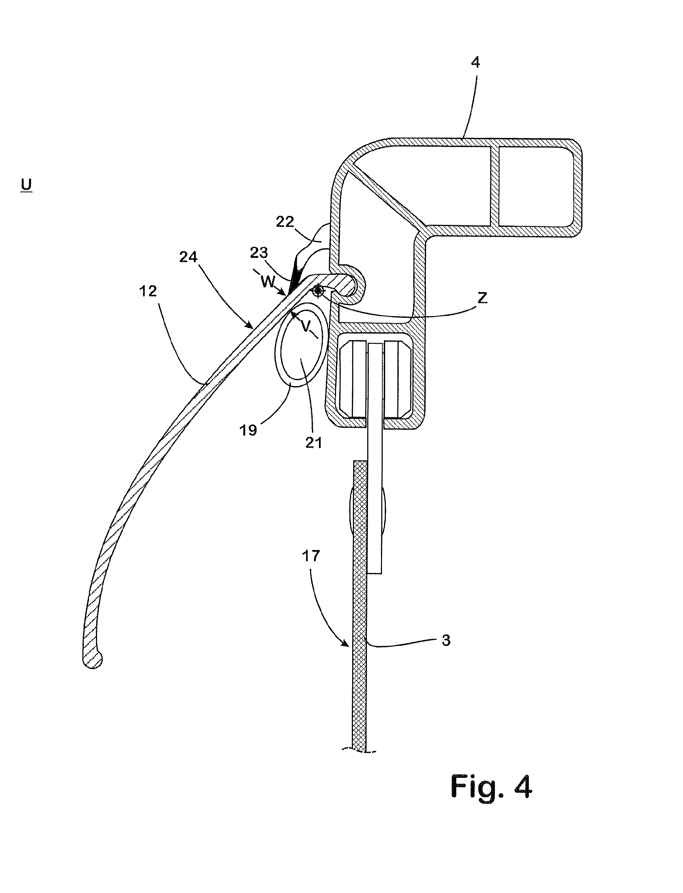

Bei der in Fig. 4 dargestellten Ausführung des Aufbaus 2 ist am Rahmenholm 4 oberhalb des Dichtstreifens 12 ein zusätzliches Betätigungselement 22 befestigt, das ebenfalls nach Art eines Balgs ausgebildet ist und über die Ventileinrichtung 20 mit Druckluft befüllt bzw. von dieser entlastet wird. Das ebenfalls schlauchförmig sich in Längsrichtung L erstreckende Betätigungselement 22, welches in Fig. 4 im erschlafften, zusammengezogenen Zustand dargestellt ist, ist derart ausgebildet, dass es mit einem vorstehenden Absatz 23 auf die zur Umgebung U gewandte Außenseite 24 des Dichtstreifens 12 drückt. Zum Aufschwenken des Dichtstreifens 12 von der Seitenplane 3 weg ist das zusätzliche Betätigungselement 22 druckentlastet, so dass es der vom sich aufweitenden, das Dichtelement 12 verschwenkenden Betätigungselement 19 aufgebrachten Kraft V allenfalls eine geringe Gegenkraft W entgegensetzt. Zum Anschwenken des Dichtelements 12 wird dagegen das Betätigungselement 19 druckentlastet, so dass es sich zusammenzieht, und das zusätzliche Betätigungselement 22 druckbeaufschlagt, so dass es sich aufweitet und durch die Gegenkraft V die Schwenkbewegung des Dichtelements 12 unterstützt.

Das Anschwenken des Dichtstreifens 12 kann auch dadurch unterstützt werden, dass das Betätigungselement 19 evakuiert wird, bis es sich auf seine minimalen Abmessungen zusammengezogen hat. Indem dabei das Betätigungselement 19 sowohl am Rahmenholm 4 als auch mit dem Dichtstreifen 12 fest verbunden ist, lässt sich durch die Evakuierung ebenfalls aktiv eine der Kraft V entgegen gesetzte Kraft auf den Dichtstreifen 12 ausüben, die das Anschwenken des Dichtstreifens 12 unterstützt und eine optimal gleichmäßige Anlage an der Seitenplane 3 gewährleistet.

### BEZUGSZEICHEN

- 1: Trailer
- 2: Aufbau
- 3: Seitenplane
- 4: Rahmenholm des Aufbaus 2
- 5: Rungen des Aufbaus 2
- 6: Ladefläche des Trailers 1
- 7: Stirnwand
- 8: Rückwand
- 9: Laufschiene
- 10: Rolle
- 12: Dichtstreifen
- 13: verdickter Rand des Dichtstreifens 12
- 14: Nut
- 15: Streifenabschnitt des Dichtstreifens 12
- 16: Abschnitt des Dichtstreifens 12
- 17: Randbereich der Seitenplane 3
- 18: Verdickung
- 19: Betätigungselement
- 20: Ventileinrichtung
- 21: Innenraum des Betätigungselements 19
- 22: zusätzliches Betätigungselement
- 23: Absatz des Betätigungselements 22
- 24: Außenseite des Dichtstreifens 12

- C: Fahrwerkschassis
- E: Ebene der Seitenplane 3 bei geschlossenem Aufbau 2
- F: Fahrtrichtung
- H: Höhe des Aufbaus 2
- L: Längsrichtung des Rahmenholms 4
- M: Rückstellmoment
- R: radiale Richtung
- U: Umgebung
- V: vom Betätigungselement 19 aufgebrachte Kraft
- W: vom zusätzlichen Betätigungselement 22 aufgebrachte Gegenkraft W
- Z: Schwenkachse

## Patentansprüche

1. Aufbau für ein Nutzfahrzeug, der einem Rahmen mit einem Rahmenholm (4), an dem eine Seitenplane (3), die aus einer geschlossenen Stellung, in der sie einen von dem Aufbau (2) umgebenen Laderaum gegenüber der Umgebung (U) abschirmt, in eine geöffnete Stellung bewegbar ist, in der der Laderaum über eine von der Seitenplane (3) freigegebene Öffnung beladbar ist, und ein Dichtstreifen (12) befestigt sind, der um eine in Längsrichtung (L) des Rahmenholms (4) gerichtete Schwenkachse (Z) aus einer ersten Schwenkstellung, in der er an der Außenseite der Seitenplane (3) anliegt, in eine zweite Schwenkstellung schwenkbar ist, in der er von dem Randstreifen (17) der Seitenplane (3) abgehoben ist, und eine Betätigungseinrichtung zum Verschwenken des Dichtstreifens (12) umfasst, **dadurch gekennzeichnet, dass** die Betätigungseinrichtung zum Verschwenken des Dichtstreifens (12) ein Betätigungselement (19) umfasst, das zwischen dem Rahmenholm (4) und dem Dichtstreifen (12) angeordnet ist und von der dem Rahmenholm (4) zugeordneten Seite des Dichtstreifens (12) gegen den Dichtstreifen (12) wirkt.

2. Aufbau nach Anspruch 1, **dadurch gekennzeichnet, dass** der Dichtstreifen (12) mindestens abschnittweise aus einem elastisch verformbaren Material besteht.

3. Aufbau nach Anspruch 2, **dadurch gekennzeichnet, dass** der Dichtstreifen (12) mit seinem dem Rahmenholm (4) zugeordneten Rand (13) in einer an dem Rahmenholm (4) ausgebildeten Nut (14) gehalten ist.

4. Aufbau nach einem der voranstehenden Ansprüche, **dadurch gekennzeichnet, dass** der Dichtstreifen (12) einen Abschnitt (16) aufweist, dessen Hauptrichtung sich bei geschlossenem Aufbau (2) parallel zur Ebene (E) der Seitenplane (3) erstreckt.

5. Aufbau nach Anspruch 4, **dadurch gekennzeichnet, dass** der sich parallel zur Ebene (E) der Seitenplane (3) bei geschlossenem Aufbau (2) erstreckende Abschnitt (16) des Dichtstreifens (12) nach außen gewölbt ist.

6. Aufbau nach einem der voranstehenden Ansprüche, **dadurch gekennzeichnet, dass** der Dichtstreifen (12) einen Abschnitt (15) aufweist, der von der Ebene (E), in der sich die Seitenplane (3) bei geschlossenem Aufbau (2) erstreckt, in einem Winkel von 90° ± 75° absteht.

7. Aufbau nach Anspruch 6, **dadurch gekennzeichnet, dass** der von der Ebene (E), in der sich die Seitenplane (3) bei geschlossenem Aufbau (2) erstreckt, abstehende Abschnitt (15) elastisch verformbar ist.

8. Aufbau nach einem der voranstehenden Ansprüche, **dadurch gekennzeichnet, dass** das Betätigungselement (19) ein mindestens abschnittweise aus einem elastischen Material bestehender Balg ist, der durch Druckbeaufschlagung eines in ihm geführten Druckmediums in radialer Richtung (R) elastisch expandierbar ist.

9. Aufbau nach einem der Ansprüche 1 bis 7,
**dadurch gekennzeichnet, dass** das Betätigungselement ein Exzenterhebel ist und die Betätigungseinrichtung eine Schwenkeinrichtung zum Schwenken des Exzenterhebels aus einer ersten Stellung, in der er eng an dem Rahmenholm (4) anliegt, in eine zweite Stellung umfasst, in der der Exzenterhebel den Dichtstreifen (12) von der Seitenplane (3) abhebt.

10. Aufbau nach einem der voranstehenden Ansprüche,
**dadurch gekennzeichnet, dass** der Rahmenholm (4) sich in Längsrichtung (L) des Nutzfahrzeugs erstreckt.

11. Aufbau nach Anspruch 10, **dadurch gekennzeichnet, dass** der Abstand (H) zwischen dem Rahmenholm (4) und der Ladefläche (6) des Nutzfahrzeugs veränderbar ist.

12. Aufbau nach einem der voranstehenden Ansprüche,
**dadurch gekennzeichnet, dass** die Betätigungseinrichtung mit einem Sensor verkoppelt ist, der in Abhängigkeit von einem äußeren Ereignis ein Stellsignal zum Verstellen des Dichtstreifens (12) an die Betätigungseinrichtung abgibt.

13. Aufbau nach Anspruch 12, **dadurch gekennzeichnet, dass** äußere Ereignisse, die ein Stellsignal auslösen, der Beginn des Öffnens und die Beendigung des Schließens der Seitenplane (3) sind.

14. Aufbau nach einem der Ansprüche 12 oder 13 und 11, **dadurch gekennzeichnet, dass** ein äußeres Ereignis, das ein Stellsignal auslöst, das Absenken des Rahmenholms (4) ist.

15. Aufbau nach einem der voranstehenden Ansprüche, **dadurch gekennzeichnet, dass** das Betätigungselement (19) integraler Bestandteil des Dichtstreifens (12) ist.

16. Aufbau nach einem der voranstehenden Ansprüche, **dadurch gekennzeichnet, dass** ein zusätzliches Betätigungselement (19) zum Ausüben einer gegen die Seitenplane (3) gerichtete Kraft auf den Dichtstreifen (12) vorgesehen ist.

17. Nutzfahrzeug mit einem gemäß einem der voranstehenden Ansprüche ausgebildeten Aufbau (2).
